# EUROPÄISCHE PATENTANMELDUNG

(11) **EP 0 982 522 A2**
(43) Veröffentlichungstag der Anmeldung: **01.03.2000**
(21) Anmeldenummer: 99114580.6
(22) Anmeldetag: 26.07.1999
(51) Int. Cl.: F16L 5/04

(54) **Brandschutzvorrichtung**

(30) Priorität: 19.08.1998 DE 19837459; 12.11.1998 DE 19852120
(71) Anmelder: Friatec Aktiengesellschaft, 68229 Mannheim (DE)
(72) Erfinder: Stahnke, Bernd-Rüdiger, 69469 Weinheim (DE); Krabbes, Jürgen, 69207 Sandhausen (DE); Weber-Daub, Michael, 68199 Mannheim (DE)
(74) Vertreter: Schmitt, Meinrad, Dipl.-Ing.

(57) **Zusammenfassung**

Eine Brandschutzvorrichtung enthält einen biegsamen Mantel (2), an dessen Innenseite eine Brandschutzeinlage (8) vorgesehen ist. Diese Brandschutzvorrichtung soll dahingehend weitergebildet werden, daß einerseits die Fertigung vereinfacht und andererseits die Handhabung bei der Montage erleichtert wird. Es wird vorgeschlagen, daß der Mantel (2) eine Anzahl von im wesentlichen geradlinig ausgebildeten Zonen (3) mit reduzierter Wanddicke aufweist, daß diese Zonen (3) im wesentlichen quer zur Längsrichtung (40 ) des Mantels (2) in vorgebbaren Abständen (6) zueinander angeordnet sind, daß die Brandschutzeinlage (8) aus biegbarem Material besteht und daß der Mantel (2) mit der Brandschutzeinlage (8) entlang der genannten Zonen (3) derartig biegbar ist, daß nach dem Biegen diese Zonen (3) im wesentlichen parallel zur Längsachse (7) des Rohres verlaufen.

## Beschreibung

Die Erfindung bezieht sich auf eine Brandschutzvorrichtung gemäß den im Oberbegriff des Patentanspruchs 1 angegebenen Merkmalen.

Eine derartige Brandschutzvorrichtung ist aus der deutschen Patentanmeldung DE 43 25 757 A1 bekannt und enthält einen um ein Rohr biegbaren Blechmantel und eine Brandschutzeinlage bzw. Quellmittel, um im Brandfalle das Rohr und/oder einen Mauerdurchbruch zu verschließen. Die Brandschutzeinlage ist in eine Anzahl von über den Umfang beabstandet angeordneten, quellmittelhaltigen Ansätzen unterteilt. Die Abstände sind derart vorgegeben, daß das Biegen des Blechmantels um das Rohr ohne gegenseitige Behinderung der Ansätze durchführbar ist. Ferner sind die Ansätze als radiale Abstandshalter zwischen dem Blechmantel und dem Rohr ausgebildet. Es besteht das Problem, daß der Blechmantel spiralartig um das Rohr gebogen wird und die miteinander zu verbindenden Enden des Blechmantels nicht fluchten, sondern bezüglich der Längsachse des Rohres zueinander einen axialen Versatz aufweisen, wodurch die erforderliche Verbindung der genannten Enden und die Handhabung bei der Montage insgesamt nicht unerheblich erschwert wird. Infolge von schräg zur Längsachse verlaufenden Biegestellen und sonstigen Deformationen ist die koaxiale Anordnung der Brandschutzvorrichtung bezüglich des Rohres nur mit einem erheblichen Aufwand durchführbar. Da die quellmittelhaltigen Ansätze als Abstandshalter dienen, besteht beim Biegen und/oder bei einem Korrekturversuch, mit welchem die nicht fluchtenden Enden wieder aufeinanderzugebogen werden sollen, die Gefahr, daß die quellmittelhaltigen Ansätze beschädigt werden und im Ergebnis eine lokale Störung in der Verteilung des Brandschutzmaterials auftritt, wodurch im Brandfalle ein gleichmäßiger Verschluß der Wand- oder Deckendurchführung in Frage gestellt ist.

Ferner ist aus der europäischen Patentanmeldung EP 0 675 308 A1 eine Brandschutzvorrichtung bzw. eine Rohrmanschette bekannt, deren Mantel aus zwei mittels eines Gelenks verbundenen Halbschalen besteht. An der Innenseite des Mantels bzw. der beiden Halbschalen ist die Brandschutzeinlage bzw. das Intumeszenzmaterial angeordnet und eine Anpassung an unterschiedliche Rohraußendurchmesser ist nicht ohne weiteres möglich. Aufgrund von Fertigungstoleranzen der mittels der Brandschutzvorrichtung zu umgebenden Rohre können in der Praxis bei der Montage Probleme auftreten, zumal eine Anpassung an die jeweilige Außengeometrie des Rohres nicht ohne weiteres durchführbar ist.

Hiervon ausgehend liegt der Erfindung die Aufgabe zugrunde, die Brandschutzvorrichtung dahingehend weiterzubilden, daß einerseits die Fertigung vereinfacht und andererseits die Handhabung bei der Montage erleichtert wird. Die Anpassung an die jeweilige Rohraußengeometrie soll problemlos möglich sein und die Anforderungen an den Brandschutz sollen mit hoher Sicherheit erfüllt werden.

Die Lösung dieser Aufgabe erfolgt gemäß den im Patentanspruch 1 angegebenen Merkmalen.

Die vorgeschlagene Brandschutzvorrichtung zeichnet sich durch einen einfachen und gleichwohl funktionsgerechten sowie den Sicherheitsanforderungen entsprechenden Aufbau aus. Der Mantel enthält eine Anzahl geradliniger Zonen mit reduzierter Dicke, welche definierte Biegezonen bilden. Da die Biegezonen im wesentlichen quer zur Längsrichtung des Mantels angeordnet sind, fluchten die Enden des Mantels nach dem Biegen, so daß problemlos die Verbindung der Mantelenden durchführbar ist. Da auch die an der Innenseite des biegbaren Mantels angeordnete Brandschutzeinlage als flexibles Band ausgebildet ist, wird eine exakte Anpassung an die Geometrie des Rohres gewährleistet. Die linienförmigen Zonen mit reduzierter Dicke sind als Schwächezonen im wesentlichen quer zur Längserstreckung des Mantels angeordnet und verlaufen nach dem Biegen im wesentlichen parallel zur Längsachse des Rohres. Bei einfacher Handhabung wird eine koaxiale Anordnung und Ausrichtung der Brandschutzvorrichtung bezüglich des Rohres gewährleistet. Die in Längsrichtung des Mantels, also nach dem Biegen in Umfangsrichtung bezüglich des Rohres beabstandet zueinander angeordneten linienförmigen Zonen reduzierter Wanddicke werden insbesondere durch Perforationen in Form von Schlitzen oder Löchern gebildet, welche nach dem Biegen im wesentlichen parallel zur Längsachse des Rohres verlaufen. Die genannten Zonen können ferner als Rillen, Einkerbungen oder dergleichen, insbesondere in der Innenfläche des biegbaren Mantels ausgebildet sein. Aufgrund der erfindungsgemäß vorgegebenen Biegezonen erfahren beim Biegen des Mantels dessen übrigen Bereiche praktisch keine Verformung, so daß nach dem Biegen die Brandschutzvorrichtung eine im wesentlichen polygonale Außenkontur aufweist, wobei die zwischen den Biegezonen befindlichen Bereiche weitgehend plan und nicht deformiert parallel zur Längsachse des Rohres verlaufen.

Der Mantel besteht grundsätzlich aus einem vergleichweise festen Material, wie insbesondere Metallblech, und enthält die Biegezonen, bevorzugt Perforationen, derart, daß der Mantel von einem Monteur manuell und/oder ohne Zuhilfenahme besonderer Verformungswerkzeuge gebogen und um das Rohr gelegt werden kann. Die geraden Biegezonen können in zweckmäßiger Weise als ausgestanzte Schlitze, Bohrungen oder dergleichen ausgebildet sein, zur Bildung von Schwächungsbereichen, wobei die dazwischenliegenden Stege in der angegebenen Weise biegbar sind. Die Brandschutzvorrichtung kann somit in geeigneter Weise bandförmig oder plattenartig als im wesentlichen ebenes Gebilde bereitgestellt werden mit minimalem Stapel- oder Verpackungsvolumen. Die eingangs erläuterte Brandschutzvorrichtung erfordert hingegen eine vorgebogene Rohrmanschette bzw. Halbschalen, welche einen erheblichen Platzbedarf bedingen. Die Brandschutzvorrichtung besitzt einen kompakten Aufbau und einen im Vergleich zu vorbekannten Konstruktionen reduzierten Außendurchmesser, so daß der Abstand von nebeneinander geführten Rohren auf ein Minimum reduziert werden kann und Wand- oder Deckendurchbrüche entsprechend klein ausgeführt werden können. Des weiteren ist die Höhe, und zwar gemessen in Längsrichtung des Rohres, kurz vorgegeben, wobei eine Standardisierung auf ein vorgegebenes Maß sich als besonders zweckmäßig erwiesen hat. So können Brandschutzvorrichtungen für Rohre bis zu einem Außendurchmesser von 160 mm mit standardisierten Höhen, bevorzugt in der Größenordnung von 75 mm, bereitgestellt werden. Die besonders kurze Ausbildung der Brandschutzvorrichtung ermöglicht darüber hinaus diese auch im Bereich von Rohrbögen problemlos und funktionssicher anzuordnen.

Auf der Innenseite des biegbaren Mantels bzw. Metallstreifens ist die Brandschutzeinlage bzw. das Intumeszenzmaterial angeordnet, die in bevorzugter Weise als ein durchgehendes Band ausgebildet ist. In zweckmäßiger Weise ist die bandförmige Brandschutzeinlage durch Kleben, insbesondere mittels doppelseitigem Klebeband, mit dem biegbaren Metallstreifen verbunden. An wenigstens einer Längsseite weist der Mantel eine Falzung oder Kantung auf, um im Brandfall den Austritt des Blähmaterials in den Brandraum zu verhindern. Die radial nach innen gerichtete Falzung oder Kantung ist mit bevorzugt keilförmigen Schlitzen derart versehen, daß die Brandschutzvorrichtung problemlos um das Rohr gelegt werden kann. Die Brandschutzeinlage besteht in zweckmäßiger Weise gleichfalls aus einem biegbaren Material, so daß die Anordnung von einzelnen oder gar vorgeformten Stücken der Brandschutzeinlage nicht erforderlich ist. Grundsätzlich kann die Brandschutzvorrichtung mittels geeigneten Verschlüssen, wie Clip, Keil, Spannverschluß, Rohrschellen oder dergleichen auf die Rohraußenfläche befestigt werden.

In einer besonderen Ausgestaltung enthält der Mantel an einem Ende wenigstens eine Zunge und am anderen Ende eine korrespondierende Öffnung, durch welche die Zunge hindurchführbar ist, um nachfolgend an die Außenfläche zurückgebogen zu werden. Vorzugsweise sind zwei Zungen in der Weise angeordnet, daß sie mit den gestanzten Schlitzen des Blechbandes korrespondieren. Die Zungen können integrierter Bestandteil des gestanzten Blechbandes sein. Es ist jedoch auch möglich, die Zungen von einem Blechstreifen abzulängen, sie durch die korrespondierenden Schlitze zu ziehen, umzubiegen und durch Nieten (Toxen) oder Schweißen zu befestigen. Das hätte den Vorteil, daß das Blechband endlos gestanzt sein kann.

Entsprechend der Zungenlänge kann problemlos die Anpassung an unterschiedliche Rohrdurchmesser vorgegeben werden. Es sei festgehalten, daß erfindungsgemäß die Brandschutzvorrichtung in unterschiedlichen Längen für unterschiedliche Rohrdurchmesser bereitgestellt wird, wobei für die Längenstufung ein relativ großes Raster vorgebbar ist. So läßt sich ohne weiteres die gleiche Brandschutzvorrichtung Rohre mit 100 mm oder 115 mm Außendurchmesser zuordnen. Dadurch lassen sich einereseits Rohrtoleranzen überbrücken, andererseits besteht auch noch die Möglichkeit, eine Schallschutzeinlage einzubringen.

In einer besonderen Ausgestaltung der Erfindung ist wenigstens ein Halter, insbesondere für die Vorwandmontage, vorgesehen, welcher als Winkel ausgebildet ist und mit seinem einen, bevorzugt doppelt abgewinkelten Ende in das Innere der Brandschutzvorrichtung eingreifen kann. Es hat sich als besonders zweckmäßig erwiesen, diesen Halter im Bereich der vorstehend erwähnten Zungen anzuordnen und damit die Zungen gegen ein unerwünschtes Aufbiegen zu sichern.

Weiterbildungen und besondere Ausgestaltungen der Erfindung sind in den Unteransprüchen sowie der weiteren Beschreibung angegeben.

Die Erfindung wird nachfolgend anhand des in der Zeichnung dargestellten besonderen Ausführungsbeispiels näher erläutert, ohne daß insoweit eine Beschränkung erfolgt. Es zeigen:
- Fig. 1: eine perspektivische Darstellung der erfindungsgemäßen Brandschutzvorrichtung,
- Fig. 2: eine Aufsicht auf die Brandschutzvorrichtung vor der Montage,
- Fig. 3: eine seitliche Ansicht auf die vormontierte Brandschutzvorrichtung, jedoch ohne Halter,
- Fig. 4: das gestanzte Blechband der Brandschutzvorrichtung,
- Fig. 5, 6, 7: weitere Ausführungsformen des Blechbandes.

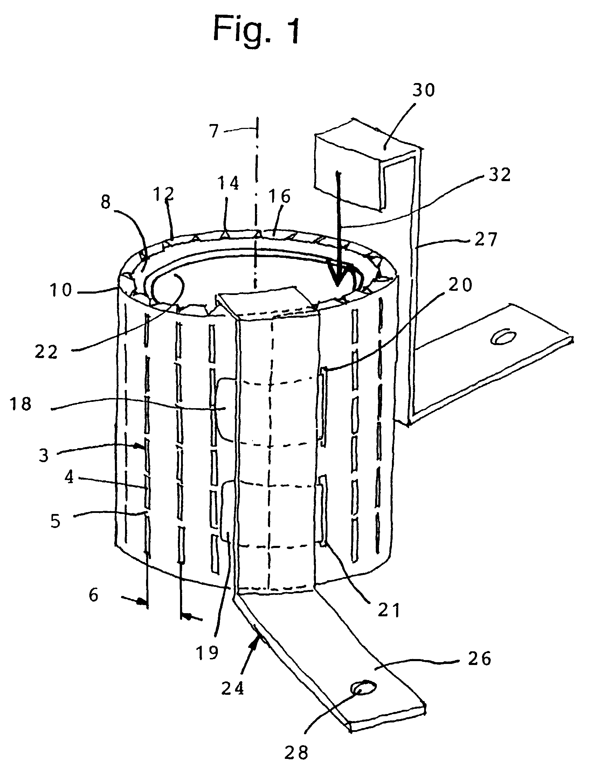

Fig. 1 zeigt in einer perspektivischen Darstellung die Brandschutzvorrichtung, welche einen bevorzugt manuell biegbaren Mantel 2 enthält. Der Mantel 2 ist in zweckmäßiger Weise als ein Metallband ausgebildet und enthält linienförmige, gerade Biegezonen 3, welche als Schlitze ausgebildete Perforationen 4 mit dazwischenliegenden schmalen Stegen 5 enthalten, um mit geringem Kraftaufwand das Biegen des Mantels 2 zu ermöglichen. Die derart gebildeten Zonen 3 mit reduzierter Wanddicke sind in Längsrichtung des Mantels 2 in einem vorgebbaren Abstand 6 zueinander angeordnet und bilden definierte Biegezonen, welche zumindest näherungsweise parallel zur Achse 7 des hier nicht dargestellten Rohres verlaufen. Die Zonen 3 bzw. die Perforationen oder Schlitze 4 sind im wesentlichen quer zur Umfangs- bzw. Längsrichtung des biegbaren Mantels 2 angeordnet. Anstelle der sich in Querrichtung erstreckenden Schlitze können im Rahmen der Erfindung die Perforationen 4 auch als Löcher mit ovalem, kreisförmigem oder sonstigem Querschnitt vorgesehen sein. Die Ausbildung des Mantels 2 aus Metall, insbesondere Stahlblech, hat sich als besonders zweckmäßig erwiesen, doch können auch andere nicht brennbare Werkstoffe vorgesehen sein. Entscheidend ist die definierte Biegbarkeit bzw. plastische Verformbarkeit des Mantels, vor allem der genannten Stege 5 zwischen den Perforationen 4, entlang der beabstandet zueinander angeordneten, zur Rohrlängsachse 7 parallelen Biegezonen 3.

In einer alternativen, hier nicht weiter dargestellten Ausführungsform sind die Zonen 3 mit reduzierter Wanddicke des Mantels 2 als gleichfalls achsparallele Rillen oder Einkerbungen oder dergleichen in der Mantelfläche ausgebildet, wobei also keine den Mantel vollständig durchdringende Schlitze oder Löcher vorhanden sind. Bevorzugt werden diese geradlinigen Einkerbungen, Rillen oder dergleichen in der Mantelinnenfläche angeordnet, welche dem Rohr zugewandt ist.

An der Innenfläche des gemäß Fig. 1 im wesentlichen zylindrisch gebogenen, manuell vorgeformten Mantels 2 ist eine Brandschutzeinlage 8 angeordnet. Die Brandschutzeinlage 8 ist bevorzugt als durchgehendes Band aus gleichfalls biegbarem Material ausgebildet. Die Brandschutzeinlage ist in geeigneter Weise, bevorzugt durch Kleben, mit der Innenfläche des biegbaren Mantels 2 verbunden. An der gemäß Zeichnung oberen Längsseite 10 besitzt der Mantel 2 eine radial nach innen gerichtete Falzung oder Kantung 12, welche durch zweckmäßig keilförmige Schlitze 14 unterteilt ist, so daß über den Umfang verteilt eine Anzahl von radial nach innen gerichteten Stegen 16 vorhanden ist, um im Brandfall einen Austritt des Blähmaterials in den Brandraum zu verhindern.

Als Verschluß weist der biegbare Mantel 2 an einem Ende wenigstens eine, gemäß Zeichnung zwei Zungen 18, 19 auf, welche durch Öffnungen 20, 21 am anderen Ende des Mantels 18 durchgeführt sind und in der dargestellten Weise zurückgebogen sind.

Es ist auch möglich, die Zungen als Blechstreifen auszubilden, sie durch die korrespondierenden Schlitze 4 zu ziehen, umzubiegen und durch Nieten (Toxen) oder Schweißen zu befestigen. Die Länge der Zungen 18, 19 ist derart vorgegeben, daß problemlos ein Toleranzausgleich bzw. eine Anpassung an den Rohraußendurchmesser durchführbar ist. Der biegbare Mantel 2 und ebenso die biegbare Brandschutzeinlage 8 ermöglichen ohne weiteres die Anpassung an die Unregelmäßigkeiten der Außengeometrie eines Rohres, welches nicht nur eine kreisförmige Außenkontur, sondern gleichermaßen auch eine ovale, eckige oder sonstige Außenkontur aufweisen kann. Dadurch kann auch körperschallentkoppelndes Material, wie z. B. PE-Schaum aufgenommen werden, ohne die Länge des Manschettenbandes zu verändern.

Ferner ist die Brandschutzeinlage 8 mit Schallschutzmitteln 22 versehen. Die Schallschutzmittel können als ein oder mehrere Streiten aus einem elastischen Material, wie einem Schaumstoff, ausgebildet sein, um eine Schallübertragung vom Rohr auf die Brandschutzvorrichtung und letztlich auf das Gebäude möglichst zu unterbinden. Als Schallschutzmittel kann ferner eine Beschichtung aus schalldämmendem Material und/oder eine Kaschierung an der Innenfläche der Brandschutzeinlage 8 angeordnet sein. Des weiteren können im Rahmen der Erfindung Schallschutzmittel und Brandschutzeinlage in axialer Richtung, bezogen auf die Rohrlängsachse, versetzt bzw. nebeneinander angeordnet sein, so daß die Schallschutzmittel 22 unmittelbar an der Innenfläche des Mantels 2 ebenso wie die Brandschutzeinlage 8 angeordnet sind. Sind die Schallschutzmittel 22, wie dargestellt, an der Innenfläche der Brandschutzeinlage 8 vorgesehen, so kann eine Ausbildung der Schallschutzmittel 22 als ein PE-Schaumband mit einer Dicke in der Größenordnung von 5 mm und/oder entsprechend den Schallschutzanforderungen vorgegeben sein. Es sei festgehalten, daß die Schallschutzmittel 22 zwar in zweckmäßiger Weise vorhanden sind, doch bedarfsweise auch entfallen können. Im übrigen ist die Brandschutzvorrichtung mit oder ohne Schallschutzmittel gleich ausgebildet, so daß nur ein einziger Typ hergestellt werden muß, welcher je nach Anforderungen mit oder ohne Schallschutzmittel bereitgestellt wird.

Zur Vorwandmontage der Brandschutzeinrichtung werden ein oder mehrere Winkelstücke 24 mit einem radial abstehenden Schenkel 26 vorgesehen, der eine Bohrung 28 zum Durchführen einer Schraube zur Befestigung am Vorwandsystem oder dergleichen enthält. Am Ende des anderen Schenkels 27 enthält das Winkelstück 24 einen zweifach abgewinkelten Arm 30 derart, daß er in Richtung des Pfeiles 32 über die Längsseite 20 in der dargestellten Weise zur Kopplung mit der Brandschutzeinrichtung geschoben werden kann. Das gemäß Zeichnung vordere Winkelstück 24 übergreift mit dem zweiten Schenkel 27 in besonders zweckmäßiger Weise die Zungen 18, 19 und sichert diese. Die den Toleranzausgleich ermöglichenden Zungen 18, 19 weisen bevorzugt eine Länge in der Größenordnung von 30 bis 70 mm, zweckmäßig zwischen 40 und 60 mm auf. Erfindungsgemäß hat es sich als vorteilhaft erwiesen, in Abhängigkeit der Länge der Brandschutzvorrichtung bzw. deren Umfang die Länge der wenigstens einen Zunge 18, 19 zwischen 10 bis 20%, insbesondere näherungsweise von 15% vorzugeben. Die wenigstens eine Zunge 18, 19 sowie die korrespondierende Öffnung 20, 21 sind erfindungsgemäß einteilig mit dem biegbaren Mantel 2 und bilden somit einen in den Mantel integrierten Verschluß, so daß zusätzliche Verbindungs- oder Befestigungsmittel nicht erforderlich sind. Hierdurch ist in besonders zweckmäßiger Weise eine Arretierung und Fixierung der Zungen 18, 19 gewährleistet und ein unerwünschtes Lockern oder gar Lösen wird in einfacher Weise problemlos unterbunden. In einer anderen Variante können die Zungen aus Blechstreifen bestehen, die durch die korrespondierenden Schlitze gezogen werden.

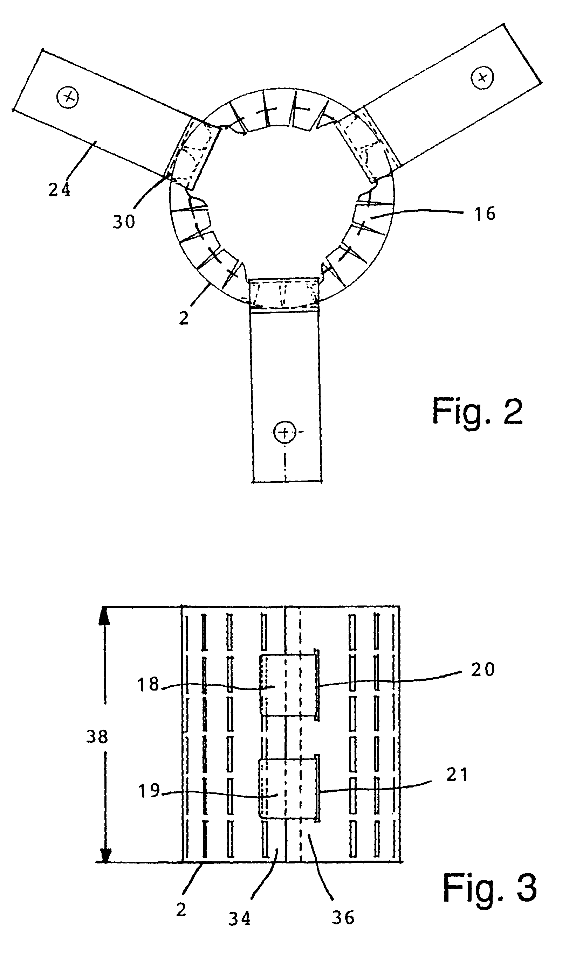

Fig. 2 zeigt eine Aufsicht von oben auf die Brandschutzvorrichtung mit drei über den Umfang symmetrisch und sternartig angeordneten Haltern oder Winkelstücken 24. Wie ersichtlich, sind die radialen Stege 16 im Bereich der abgewinkelten Arme durch diese noch weiter nach innen gebogen, wodurch in bevorzugter Weise ein funktionssicheres Festspannen der Brandschutzvorrichtung in den Haltern oder Winkelstücken 24 gewährleistet ist.

Fig. 3 zeigt eine Ansicht der vormontierten Brandschutzvorrichtung mit den über das eine Ende 34 des äußeren Mantels 2 zurückgebogenen Zungen 18, 19. Auch ist das radial außen über das genannte erste Ende 34 greifende zweite Ende 36 mit den Öffnungen 20, 21 gut zu erkennen. Die Höhe 38, gemessen in Richtung der Längserstreckung des hier nicht weiter dargestellten Rohres, ist vergleichsweise kurz vorgegeben, so daß die Brandschutzvorrichtung problemlos auch für Rohrbögen vorgesehen werden kann. Ferner sei an dieser Stelle festgehalten, daß die Brandschutzeinrichtung zur Vorwandmontage ebenso geeignet ist wie zur Direktmontage oder teilweisen Direktmontage. Die Perforationen oder Schlitze 4 ermöglichen hierbei einen verbesserten Halt des Mörtels oder dergleichen, mit welchem die Wand- oder Deckenöffnung ausgefüllt wird.

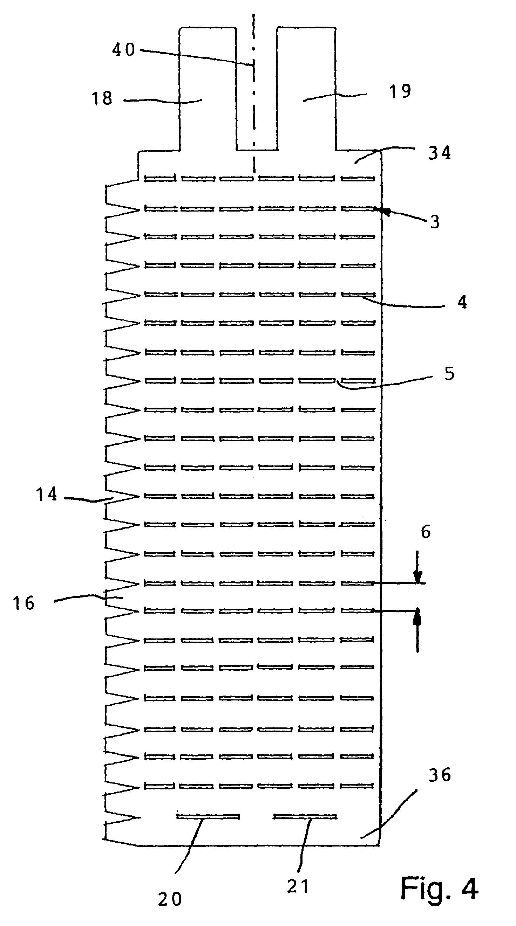

Fig. 4 zeigt das gestanzte Blechband der erfindungsgemäßen Brandschutzvorrichtung. Die Brandschutzvorrichtung wird in ebener, plattenartiger Form ausgeliefert, so daß das Lagerungs- und Verpackungsvolumen minimal ist. Wie ersichtlich, ist der Mantel 2 als ein sich in Längsrichtung 40 erstreckendes, ebenes Band, insbesondere aus Stahlblech, ausgebildet. Die zur Längsrichtung 40 im wesentlichen rechtwinklig angeordneten Biegezonen 3 in Form der Perforationen 4, die zur Abkantung vorgesehenen keilförmigen Schlitze 14 und ebenso die Zungen 18, 19 sind in bevorzugter Weise durch Ausstanzen gefertigt. Hierbei durchläuft das Band schrittweise, insbesondere entsprechend dem Abstand 6 der in Längsrichtung aufeinanderfolgenden Perforationen oder Schlitze 4 das Stanzwerkzeug, wobei auch für das Einbringen der Öffnungen 20, 21 der gleiche Förderschritt für ein dementsprechend anderes Werkzeug eingehalten wird. In einer anderen Variante können die Zungen aus Blechstreifen bestehen, die durch die korrespondierenden Schlitze gezogen werden.

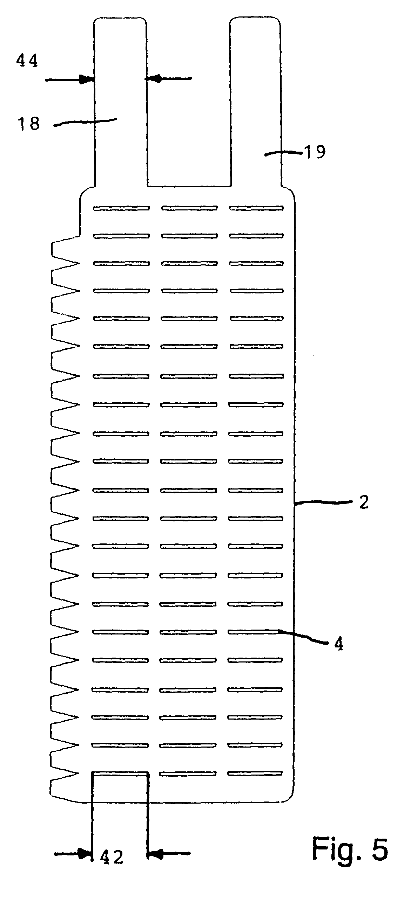

Fig. 5 zeigt das gestanzte Blechband bzw. den biegbaren Mantel 2 einer weiteren Ausführungsform der erfindungsgemäßen Brandschutzvorrichtung. Hierbei fluchten die Zungen 18 bzw. 19 jeweils mit einer Reihe der erläuterten Schlitze 4, welche eine vorgegebene Breite 42 aufweisen. Die Breite 42 der jeweiligen Schlitze 4 sind auf die Breite 44 der fluchtenden Zungen 18 bzw. 19 derart abgestimmt, daß die Zungen 18, 19 in die fluchtenden Schlitze 4 eingreifen können. Im Unterschied zu dem an Hand von Fig. 4 erläuterten Ausführungsbeispiel sind also keine besonderen Schlitze für die Zungen erforderlich, sondern die zum Biegen des Mantels 2 vorgesehenen Schlitze 4 werden als die mit den Zungen 18, 19 korrespondierenden Öffnungen genutzt. Hierdurch wird in besonders zweckmäßiger Weise gewährleistet, daß durch Verkürzen der Bandlänge die Brandschutzvorrichtung bzw. die Brandschutzmanschette an den Umfang eines Rohres problemlos angepaßt werden kann.

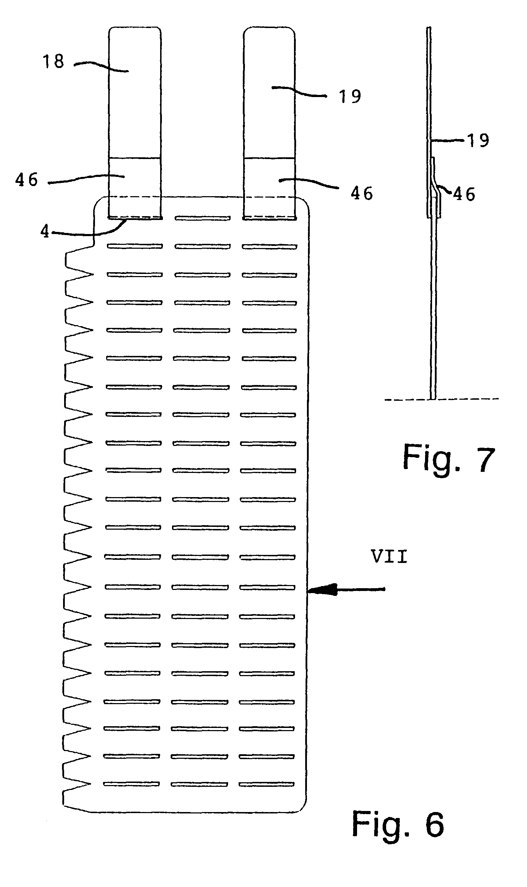

Fig. 6 und 7 zeigen eine besondere Ausgestaltung, wobei Fig. 7 eine seitliche Ansicht des biegbaren Mantels 2 oder Blechbandes in Blickrichtung VII gemäß Fig. 6 zeigt. Hierbei sind die Zungen 18, 19 nicht integrale Bestandteile, sondern separate Streifen, insbesondere aus Blech. Diese Zungen 18, 19 sind separat hergestellt und durch Schlitze 4 hindurchgeführt, wobei das durchgeführte Ende 46 zurückgebogen und gemäß Zeichnung oberen Teil der Zunge 19 teilweise überlappt. In dem Überlappungsbereich ist eine feste Verbindung, insbesondere durch Nieten (Toxen) oder Schweissen in zweckmäßiger Weise zwecks Sicherung vorhanden. Aufgrund dieser Ausgestaltung kann zum einen die Länge des biegbaren Mantels angepaßt werden. Darüberhinaus ergibt sich ein wichtiger Fertigungsvorteil dahingehend, daß zunächst ein endloses Band gefertigt werden kann, von welchem der biegbare Mantel 2 in der gewünschten Länge abgeschnitten wird. Das Anbringen der zunächst separaten Zungen 18, 19 wird in zweckmäßiger Weise werksseitig durchgeführt, so daß diese Ausführungsform für den Anwender keinen Unterschied im Vergleich mit der vorstehend erläuterten Ausführungsform ergibt.

### Bezugszeichen

- 2: biegbarer Mantel
- 3: Zone
- 4: Perforation / Schlitz
- 5: schmaler Steg
- 6: Abstand
- 7: Achse
- 8: Brandschutzeinlage
- 10: obere Längsseite
- 12: Falzung / Kantung
- 14: keilförmiger Schlitz
- 16: Steg
- 18, 19: Zunge
- 20, 21: Öffnung
- 22: Schallschutzmittel
- 24: Halterung / Winkelstück
- 26, 27: Schenkel von 24
- 28: Bohrung
- 30: zweifach abgewinkelter Arm von 24
- 32: Pfeil
- 34: erstes Ende von 2
- 36: zweites Ende von 2
- 38: Höhe
- 40: Längsrichtung
- 42: Breite von 4
- 44: Breite von 18 / 19
- 46: Ende

## Patentansprüche

1. Brandschutzvorrichtung, enthaltend einen biegsamen Mantel (2), an dessen Innenseite eine Brandschutzeinlage (8) vorgesehen ist, wobei die Brandschutzvorrichtung im Bereich der Außenfläche eines Rohres anzuordnen ist,
dadurch gekennzeichnet,
daß der Mantel (2) eine Anzahl von im wesentlichen geradlinig ausgebildeten Zonen (3) mit reduzierter Wanddicke aufweist,
daß diese Zonen (3) im wesentlichen quer zur Längsrichtung (40 ) des Mantels (2) in vorgebbaren Abständen (6) zueinander angeordnet sind,
daß die Brandschutzeinlage (8) aus biegbarem Material besteht und
daß der Mantel (2) mit der Brandschutzeinlage (8) entlang der genannten Zonen (3) derartig biegbar ist, daß nach dem Biegen diese Zonen (3) im wesentlichen parallel zur Längsachse (7) des Rohres verlaufen.

2. Brandschutzvorrichtung nach Anspruch 1, dadurch gekennzeichnet, daß der Manteil (2) einteilig ausgebildet ist und/oder die Brandschutzeinlage (8) als ein einteiliges biegsames Band ausgebildet ist und/oder daß der Mantel (2) und die Brandschutzeinlage (8) manuell biegbar sind.

3. Brandschutzvorrichtung nach Anspruch 1 oder 2, dadurch gekennzeichnet, daß die Zonen als Perforationen in Form von Schlitzen (4) oder Löchern ausgebildet sind, die in Längsrichtung (40) des Mantels (2) in zueinander beabstandeten Linien angeordnet sind, und/oder daß die Zonen (3) durch Rillen oder Einkerbungen, insbesondere in der Innenfläche des Mantels (2) mit der Brandschutzeinlage (8), in Längsrichtung (40) beabstandet angeordnet sind.

4. Brandschutzvorrichtung, insbesondere nach einem der Ansprüche 1 bis 3, dadurch gekennzeichnet, daß an der Innenfläche des biegbaren Matels (2) und/oder der Brandschutzeinlage (8) Schallschutzmittel (22) angeordnet sind.

5. Brandschutzvorrichtung nach einem der Ansprüche 1 bis 4, dadurch gekennzeichnet, daß die Perforationen als Schlitze (4) ausgebildet sind, welche im wesentlichen quer zur Längsrichtung (40 ) des Mantels (2) angeordnet sind und zwischen welchen schmale Stege (5) vorgesehen sind und/oder daß die Perforationen oder Schlitze (4) in Umfangsrichtung in einem vorgebbaren Abstand (6) zueinander angeordnet sind.

6. Brandschutzvorrichtung, insbesondere nach einem der Ansprüche 1 bis 5, dadurch gekennzeichnet, daß ein in den Mantel (2) integrierter Verschluß vorgesehen ist und/oder daß an dem einen Ende (34) des Mantels (2) wenigstens eine Zunge (18, 19) vorgesehen ist, welcher insbesondere am anderen Ende (36) wenigstens eine Öffnung (20, 21) zugeordnet ist, durch welche die Zunge (18, 19) hindurchführbar und insbesondere über das erste Ende (34) zurückbiegbar ist.

7. Brandschutzvorrichtung nach einem der Ansprüche 1 bis 6, dadurch gekennzeichnet, daß an wenigstens einer Längsseite (10) eine Abkantung (12) und/oder radial nach innen gerichtete Stege (16) vorgesehen sind, zwischen welchen bevorzugt keilförmige Schlitze (14) angeordnet sind.

8. Brandschutzvorrichtung nach einem der Ansprüche 1 bis 7, dadurch gekennzeichnet, daß insbesondere zur Vorwandmontage wenigstens ein Halter (24) vorgesehen ist, welcher bevorzugt als Winkelstück ausgebildet ist, und/oder daß wenigstens ein Halter (24) im Bereich der Zunge (18, 19) an der Außenseite diese übergreifend angeordnet ist zwecks Arretierung derselben.

9. Brandschutzvorrichtung nach einem der Ansprüche 1 bis 8, dadurch gekennzeichnet, daß die Schlitze (4), welche fluchtend mit der wenigstens einen Zunge (18, 19) angeordnet sind, eine auf die Zungenbreite (44) derart abgestimmte Breite (42) aufweisen, daß die Zunge (18) durch den Schlitz (4) hindurchführbar ist.

10. Brandschutzvorrichtung nach einem der Ansprüche 1 bis 9, dadurch gekennzeichnet, daß die Zunge (18, 19) als ein durch einen der Schlitze (4) hindurchgeführter Streifen ausgebildet ist, dessen freies Ende (46) als Lasche zurückgebogen und bevorzugt mit dem übrigen Teil der Zunge (18 bzw. 19) fest verbunden ist.
